# FASCICULE DE BREVET EUROPEEN

(11) **EP 2 949 449 B1**
(45) Date de publication et mention de la délivrance du brevet: **15.11.2017**
(21) Numéro de dépôt: 15169192.0
(22) Date de dépôt: 26.05.2015
(51) Int. Cl.: B29C 53/60, F17C 1/06

(54) **RÉSERVOIR DESTINÉ AU STOCKAGE DE MILIEUX LIQUIDES OU GAZEUX SOUS PRESSION ET SON PROCÉDÉ DE FABRICATION**
TANK ZUM LAGERN VON FLÜSSIGEN ODER GASFÖRMIGEN MEDIEN, DIE UNTER DRUCK STEHEN, UND SEIN HERSTELLUNGSVERFAHREN
TANK FOR STORING LIQUID OR GASEOUS MEDIA UNDER PRESSURE AND METHOD FOR MANUFACTURING SAME

(30) Priorité: 28.05.2014 FR 1454834
(43) Date de publication de la demande: 02.12.2015
(73) Titulaire: Stelia Aerospace Composites, 33160 Salaunes (FR)
(72) Inventeur: FOURAGE, Guillaume, 33200 Bordeaux (FR); LAGUNEGRAND, Laurent, 33300 Bordeaux (FR)
(74) Mandataire: Ipside

(56) Documents cités:
- EP-A1- 0 580 535
- DE-A1-102010 017 413
- US-A- 5 499 739
- US-A1- 2013 299 505

## Description

### ARRIERE-PLAN DE L'INVENTION

### Domaine de l'invention

La présente invention concerne un réservoir destiné au stockage de milieux liquides ou gazeux sous pression et un procédé de fabrication d'un tel réservoir.

### Arrière-plan technologique

On connait des réservoirs composites destinés au stockage de gaz sous haute pression (entre 200 et 1000 bars par exemple).

De tels réservoirs sont utilisés dans divers domaines techniques notamment pour le stockage d'air comprimé pour les appareils d'assistance respiratoire, de gaz naturel pour les véhicules ou encore d'hydrogène pour les piles à combustible.

Ces réservoirs sont le plus souvent cylindriques et fermés par des dômes pourvus ou non chacun d'un embout.

Pour résister aux fortes pressions des gaz ainsi stockés, ces réservoirs comportent un liner définissant une chambre de stockage étanche, placé dans une structure de renfort mécanique réalisée en matériau composite.

Les réservoirs peuvent ainsi être de plusieurs types, soit à liner métallique recouvert d'une couche de composite sur sa partie centrale (Type II), soit à liner métallique entièrement recouvert de composite (Type III), soit à liner en matière plastique recouvert de composite (Type IV).

Les principaux avantages des liners thermoplastiques par rapport aux liners métalliques résident dans leur poids moins élevé et en une tenue mécanique supérieure aux sollicitations cycliques.

La structure de renfort mécanique est typiquement réalisée par bobinage de couches de fibres autour du liner, ces fibres étant de préférence pré-imprégnées d'une résine thermodurcissable.

Une ou plusieurs couches supplémentaires de protection peuvent être ajoutées après réalisation de la structure de renfort.

Le choix de l'angle et de l'agencement des différentes couches d'enroulement dépend des contraintes techniques du moyen de bobinage, de la géométrie du réservoir, des performances visées et de l'éventuel glissement des fibres au début de l'enroulement.

On constate néanmoins que les angles formés par les fibres déposées par rapport à l'axe longitudinal du réservoir et l'agencement des couches ont un impact direct sur la pression et le mode de rupture des réservoirs ainsi réalisés.

Il est connu que l'angle théorique d'enroulement permettant d'atteindre la pression d'éclatement la plus élevée sur une structure tubulaire élastique avec effet de fond, sous le seul effet de la pression interne, est de 54.7°.

Toutefois, des structures de renfort mettant parallèlement en oeuvre des angles compris entre 50° et 58° sont largement connues pour leur résistance mécanique.

On connait également des réservoirs utilisant des combinaisons d'enroulement de type polaire (angle compris entre 10 et 30°) et circonférentiel (angle de l'ordre de 90°), permettant de conserver un mode de rupture sain, c'est-à-dire une rupture du réservoir en un seul morceau sans génération de projectiles.

Certains réservoirs utilisent encore des combinaisons d'enroulement de type hélicoïdaux et circonférentiels, l'angle de l'enroulement hélicoïdal étant déterminé par le ou les diamètres d'ouverture polaire minimum du liner.

Cependant, la pression de rupture associée et les performances de ces réservoirs, en particulier le rapport entre la masse de gaz stocké et la masse du réservoir, sont largement insuffisantes.

De plus, la fabrication de ces réservoirs qui met en oeuvre un nombre de couches déposées relativement important, est longue et coûteuse.

On connaît dans l'état de la technique la demande de brevet allemand N° DE 10 2010 017413 A1, qui décrit un récipient sous pression pour le stockage d'un fluide présentant un récipient interne en plastique et une enveloppe extérieure appliquée sur le récipient interne en plastique.

On connaît également dans l'état de la technique la demande de brevet européen N° EP 0 580 535 A1, qui se rapporte à un récipient pour le stockage de fluide sous pression, à rupture sans fragmentation.

On connaît également dans l'état de la technique le brevet américain N° US 5 499 739, qui concerne un revêtement intérieur de récipient sous pression pour les réservoirs de carburant utilisés pour les gaz à haute pression.

On connaît également dans l'état de la technique la demande de brevet américain N° US 2013/299505, qui décrit un procédé de fabrication d'un réservoir à haute pression.

La présente invention vise à pallier ces divers inconvénients de l'art antérieur en proposant un réservoir de stockage de gaz sous pression et son procédé de fabrication, simples dans leur conception et dans leur mode opératoire, assurant un mode de rupture sain de ce réservoir, tout en minimisant la masse de l'enroulement filamentaire et en optimisant le rapport masse de gaz stocké sur masse du réservoir, pour une pression de service donnée.

### BREVE DESCRIPTION DE L'INVENTION

A cet effet, l'invention concerne un réservoir destiné au stockage de milieux liquides ou gazeux sous pression, comprenant une enveloppe intérieure définissant une chambre de stockage et une enveloppe de renforcement mécanique entourant au moins ladite enveloppe intérieure, ladite enveloppe intérieure comprenant une ouverture à au moins une de ses extrémités, une partie centrale cylindrique et deux parties d'extrémité dont au moins une est bombée vers l'extérieur, ladite enveloppe intérieure définissant un axe longitudinal.

Selon l'invention, cette enveloppe de renforcement mécanique comprend successivement en partant de l'enveloppe intérieure vers l'extérieur:
- un premier enroulement filamentaire comprenant une couche ou un empilement de couches ayant chacune des fibres agencées de sorte que l'angle αi formé entre la direction longitudinale de chaque fibre et ledit axe longitudinal est compris entre +/- 45° et +/- 85°, la valeur absolue de l'angle αi formé par les fibres de chaque couche superposée sur une autre couche de cet empilement étant supérieure à la valeur absolue de l'angle αi formé par les fibres de la couche immédiatement inférieure dans cet empilement,
- un deuxième enroulement filamentaire comprenant une ou plusieurs couches dites intermédiaires placées sous une couche unique dite couche la plus externe dudit deuxième enroulement, lesdites couches intermédiaires étant superposées en définissant un empilement, ladite couche ou chaque couche intermédiaire de cet empilement ayant des fibres agencées de sorte que la valeur absolue de l'angle αj formé entre la direction longitudinale de chaque fibre de la couche intermédiaire correspondante et ledit axe longitudinal est :
   * soit égale ou supérieure à la valeur absolue maximale de l'angle αi pour le premier enroulement, et égale ou supérieure à la valeur absolue de l'angle αj formé par les fibres de la couche intermédiaire immédiatement inférieure lorsque ladite couche intermédiaire correspondante est superposée sur une autre couche intermédiaire,
   * soit égale ou inférieure à la valeur absolue la plus petite de l'angle αi pour ledit premier enroulement, et égale ou inférieure à la valeur absolue de l'angle αj formé par les fibres de la couche intermédiaire immédiatement inférieure lorsque ladite couche intermédiaire correspondante est superposée sur une autre couche intermédiaire,
   ladite couche la plus externe dudit deuxième enroulement étant une couche hélicoidale fermante ayant des fibres agencées de sorte que pour ladite ou chaque ouverture de ladite enveloppe intérieure, le diamètre d'ouverture polaire de ladite couche hélicoidale fermante est égal ou sensiblement égal au diamètre de l'ouverture de l'enveloppe intérieure considérée,
- au moins une couche circonférentielle ayant des fibres agencées par rapport audit axe longitudinal selon un angle αk compris entre +/- 80° et +/-90°, et/ou au moins une couche hélicoidale ayant des fibres agencées par rapport audit axe longitudinal selon un angle αk compris entre +/- 5° et +/- 45° et/ou au moins une couche hélicoidale fermante ayant des fibres agencées de sorte que pour ladite ou chaque ouverture de ladite enveloppe intérieure, le diamètre d'ouverture polaire de ladite couche hélicoidale fermante est égal ou sensiblement égal au diamètre de l'ouverture de l'enveloppe intérieure considérée, pour compléter le nombre de couches de l'ensemble formé par les premier et deuxième enroulements filamentaires de manière à obtenir l'épaisseur totale de l'enveloppe de renforcement mécanique dans ladite partie centrale cylindrique.

Avantageusement, un tel réservoir assure un mode de rupture du réservoir en un seul morceau et un rapport optimisé entre la masse de gaz stocké et la masse du réservoir, pour une pression de service fixée.

Le rapport entre la pression d'éclatement et la masse du réservoir est ainsi maximisé démontrant l'optimisation du nombre de couches déposées sur l'enveloppe intérieure de stockage, pour réaliser l'enveloppe de renfort mécanique.

On notera que le diamètre de l'ouverture ou d'au moins une des ouvertures de l'enveloppe intérieure pouvant ne pas être constant, on considérera pour la couche hélicoidale fermante, le diamètre d'ouverture au droit de la zone où cette couche se termine. A titre purement illustratif, l'ouverture ou une des ouvertures de l'enveloppe intérieure peut présenter une section de forme tronconique.

L'objectif de l'agencement des différentes couches du premier enroulement filamentaire, c'est-à-dire la manière avec laquelle l'angle d'inclinaison αi formé entre l'axe longitudinal défini par l'enveloppe intérieur et la direction longitudinale de chaque fibre des différentes couches de cet enroulement, augmente avec la distance séparant la couche considérée de l'enveloppe intérieure, est d'utiliser au maximum le potentiel de reprise des efforts de chaque fibre afin de minimiser la quantité de fibres déposées à iso-performance, c'est-à-dire pour une valeur de pression de rupture donnée.

En d'autres termes, on augmente la valeur de l'angle d'inclinaison αi des fibres des couches successives du premier enroulement filamentaire avec la distance séparant ces couches de l'enveloppe intérieure de manière à accroître la contrainte dans les fibres de chacune des couches jusqu'à ce que celle-ci soit égale, ou sensiblement égale, à celle exercée sur les fibres de la première couche en contact direct avec l'enveloppe intérieure. En mettant le réservoir sous pression, on obtient ainsi une contrainte s'appliquant sur les fibres dans toutes les couches du premier enroulement filamentaire, égale ou sensiblement égale.

L'apport du deuxième enroulement filamentaire est double :
- d'une part, les couches dont la valeur de l'angle d'inclinaison αj des fibres par rapport à l'axe longitudinal, est supérieure à la valeur maximale de l'angle d'inclinaison αi atteinte dans le premier empilement, assurent une continuité de ce qui a été réalisé sur le premier enroulement filamentaire. On cherche de nouveau à avoir une contrainte égale ou sensiblement égale dans chaque couche. Ceci est vrai jusqu'au moment où l'angle atteint 90°, car on a alors atteint la valeur de l'angle maximum pour la reprise des efforts par les fibres de la couche considérée.
- par ailleurs, les couches pour lesquelles la valeur de l'angle d'inclinaison αj des fibres est inférieure à la valeur minimale de l'angle αi du premier enroulement filamentaire, sont là pour progressivement couvrir le fond du réservoir, et éviter des sauts de rigidité importants.

L'angle d'inclinaison αj diminue alors pour la même raison que rappelée ci-dessus, c'est-à-dire que l'on cherche toujours à utiliser le maximum du potentiel de chaque couche de manière à minimiser le nombre de couches.

Le réservoir peut être notamment mis en oeuvre pour le stockage d'un gaz ou d'un mélange de gaz. A titre purement illustratif, ce gaz peut être de l'air, l'azote, l'hélium, l'hydrogène ou autre.

Le présent réservoir trouve des applications dans les domaines mettant en oeuvre des réservoirs de stockage sous pression tels que l'automobile, l'aéronautique, ...

Dans différents modes de réalisation particuliers de ce réservoir, chacun ayant ses avantages particuliers et susceptibles de nombreuses combinaisons techniques possibles:
- l'épaisseur dudit premier enroulement filamentaire représente entre 15 et 35% de l'épaisseur de l'enveloppe de renforcement mécanique dans ladite partie centrale cylindrique,
- l'épaisseur de l'ensemble formé par les premier et deuxième enroulements filamentaires à l'exception de ladite couche hélicoidale fermante, représente au plus 45% de l'épaisseur de l'enveloppe de renforcement mécanique dans ladite partie centrale cylindrique.

De préférence, l'épaisseur de l'ensemble formé par les premier et deuxième enroulements filamentaires à l'exception de ladite couche hélicoidale fermante, représente entre 23 et 45% de l'épaisseur de l'enveloppe de renforcement mécanique dans ladite partie centrale cylindrique.
- la couche la plus externe de l'enveloppe de renforcement mécanique est une couche de type circonférentielle ayant des fibres agencées par rapport audit axe longitudinal selon un angle αl compris entre +/- 80° et +/- 90°.
- l'enveloppe de renforcement mécanique présente une fraction massique de fibres comprise entre 65% et 85%.

De préférence, l'enveloppe de renforcement mécanique présente une fraction massique de fibres comprise entre 75% et 81%.
- les fibres sont choisies dans le groupe comprenant les fibres de carbone, de verre, d'aramide, les fibres organiques végétales, les fibres organiques animales, les fibres minérales et des combinaisons de ces éléments.

A titre purement illustratif, le réservoir peut être réalisé en utilisant des fibres dites naturelles telles que les fibres organiques végétales (cellulosiques tels que le chanvre, le lin, ou le bambou par exemple) ou les fibres organiques animales (protéiniques tels que la soie par exemple), les fibres minérales ou une combinaison de plusieurs types de fibres.
- l'enveloppe intérieure comporte une ouverture à ses deux extrémités, chacune de ses extrémités recevant une embase.

A titre d'exemple purement illustratif, une première de ces embases comprend un raccord tel qu'un robinet, l'autre extrémité comportant un élément choisi dans le groupe comprenant un robinet, un capteur de pression et/ou de température et/ou d'humidité, un accéléromètre, un dispositif de sécurité, un dispositif de sécurité de type PRD ("Pressure Relief Device" - "Dispositif de détente "), un dispositif de sécurité de type TPRD ("Thermal Pressure Relief Device" - "Dispositif de détente thermique") et des combinaisons de ces éléments.

Alternativement, l'enveloppe intérieure comporte à une seule de ses extrémités une ouverture, l'autre extrémité étant fermée et l'extrémité ouverte recevant une embase.

L'enveloppe de renforcement mécanique est disposée sur au moins une partie de l'enveloppe intérieure en entourant avantageusement cette ou ces embases.

A titre d'exemple, chaque embase comporte une partie de col cylindrique creux définissant un canal intérieur et une partie annulaire.

Cette embase peut être entièrement métallique ou en alliage, ou comporter un insert métallique ou en alliage recouvert au moins en partie d'une interface plastique pour faciliter l'assemblage de l'enveloppe intérieure et de l'embase. Alternativement, cette embase peut être réalisée en matière plastique ou en matière plastique renforcée. A titre d'exemple purement illustratif, la matière plastique est renforcée avec des fibres courtes ou longues ou encore broyées, ou avec des billes. Ces fibres et ces billes peuvent être en verre ou en carbone.
- les fibres sont noyées dans une matrice durcie réalisée à partir d'une résine thermodurcissable ou thermoplastique.

La résine utilisée peut être de type thermodurcissable, telle qu'une résine vinylester, polyester ou époxy, ou de type thermoplastique telle qu'une résine polyamide ou polypropylène.
- ladite enveloppe intérieure est métallique ou en matière plastique.

La présente invention concerne également un moyen de transport équipé d'au moins un réservoir tel que décrit précédemment.

Ce moyen de transport peut être un aéronef ou un véhicule tel qu'un camion ou une automobile.

La présente invention concerne encore l'utilisation du réservoir tel que décrit précédemment comme source d'alimentation en gaz ou en combustible.

Un tel réservoir peut être mis en oeuvre en tant que source d'alimentation stationnaire ou embarquée à bord d'un moyen de transport.

A titre purement illustratif, un tel réservoir peut être utilisé comme source d'alimentation pour une pile à combustible ou encore dans une installation de remplissage ou de distribution telle qu'une station-service.

La présente invention concerne encore l'utilisation du réservoir tel que décrit précédemment comme accumulateur d'énergie.

La présente invention concerne encore un procédé fabrication d'un réservoir destiné au stockage de milieux liquides ou gazeux sous pression, ledit réservoir comprenant une enveloppe intérieure définissant une chambre de stockage et une enveloppe de renforcement mécanique entourant au moins ladite enveloppe intérieure, ladite enveloppe intérieure comprenant une ouverture à au moins une de ses extrémités, une partie centrale cylindrique et deux parties d'extrémité dont au moins une est bombée vers l'extérieur, ladite enveloppe intérieure définissant un axe longitudinal.

Selon l'invention, on réalise les étapes suivantes pour réaliser ladite enveloppe de renforcement mécanique :
- former d'abord un premier enroulement filamentaire comprenant une couche ou un empilement de couches ayant des fibres agencées de sorte que l'angle αi formé entre la direction longitudinale de chaque fibre et ledit axe longitudinal est compris entre +/- 45° et +/- 85°, la valeur absolue de l'angle αi formé par les fibres de chaque couche superposée sur une autre couche de cet empilement étant supérieure à la valeur absolue de l'angle αi formé par les fibres de la couche immédiatement inférieure dans cet empilement,
- former un deuxième enroulement filamentaire comprenant une ou plusieurs couches dites intermédiaires placées sous une couche unique dite couche la plus externe dudit deuxième enroulement, lesdites couches intermédiaires étant superposées en définissant un empilement, ladite couche ou chaque couche intermédiaire de cet empilement ayant des fibres agencées de sorte que la valeur absolue de l'angle αj formé entre la direction longitudinale de chaque fibre de la couche intermédiaire correspondante et ledit axe longitudinal est :
   * soit égale ou supérieure à la valeur absolue maximale de l'angle αi pour le premier enroulement, et égale ou supérieure à la valeur absolue de l'angle αj formé par les fibres de la couche intermédiaire immédiatement inférieure lorsque ladite couche intermédiaire correspondante est superposée sur une autre couche intermédiaire,
   * soit égale ou inférieure à la valeur absolue la plus petite de l'angle αi pour ledit premier enroulement, et égale ou inférieure à la valeur absolue de l'angle αj formé par les fibres de la couche intermédiaire immédiatement inférieure lorsque ladite couche intermédiaire correspondante est superposée sur une autre couche intermédiaire,
   ladite couche la plus externe dudit deuxième enroulement étant une couche hélicoidale fermante ayant des fibres agencées de sorte que, pour ladite ou chaque ouverture de ladite enveloppe intérieure, le diamètre d'ouverture polaire de ladite couche hélicoidale fermante est égal ou sensiblement égal au diamètre de l'ouverture de l'enveloppe intérieure considérée,
- compléter ensuite ces premier et deuxième enroulements filamentaires avec la dépose d'au moins au moins une couche circonférentielle ayant des fibres agencées par rapport audit axe longitudinal selon un angle αk compris entre +/- 80° et +/- 90°, et/ou d'au moins une couche hélicoidale ayant des fibres agencées par rapport audit axe longitudinal selon un angle αk compris entre +/- 5° et +/- 45°, et/ou d'au moins une couche hélicoidale fermante ayant des fibres agencées de sorte que, pour ladite ou chaque ouverture de ladite enveloppe intérieure, le diamètre d'ouverture polaire de ladite couche hélicoidale fermante est égal ou sensiblement égal au diamètre de l'ouverture de l'enveloppe intérieure considérée, pour obtenir l'épaisseur totale de l'enveloppe de renforcement mécanique dans ladite partie centrale cylindrique.

Le réservoir peut être réalisé en utilisant un des procédés suivants : un procédé d'enroulement filamentaire avec imprégnation directe par voie humide, un procédé d'enroulement filamentaire avec imprégnation indirecte par voie sèche (enroulement de fibres pré imprégnées), un procédé de dépose automatique de fibres (AFP), une dépose manuelle de fibres, l'enroulement filamentaire de fibres sèches puis l'imprégnation indirecte par un procédé de type RTM (Resin Transfer Molding), un procédé de tressage de fibres ("braiding").

On observe ici que le strict respect de la séquence de dépose des différentes couches est nécessaire pour atteindre l'objectif de la présente invention.

Dans différents modes de réalisation particuliers de ce procédé, chacun ayant ses avantages particuliers et susceptibles de nombreuses combinaisons techniques possibles :
- la dernière couche déposée et formant ainsi la couche la plus externe de l'enveloppe de renforcement mécanique est une couche de type circonférentielle ayant des fibres agencées par rapport audit axe longitudinal selon un angle αl compris entre +/- 80° et +/- 90°,
- les fibres sont imprégnées dans une résine thermodurcissable ou thermoplastique avant d'être enroulées sur ladite enveloppe,
- l'épaisseur dudit premier enroulement filamentaire représente entre 15 et 35% de l'épaisseur de l'enveloppe de renforcement mécanique dans ladite partie centrale cylindrique,
- l'épaisseur de l'ensemble formé par les premier et deuxième enroulements filamentaires à l'exception de ladite couche hélicoidale fermante, représente entre 23 et 45% de l'épaisseur de l'enveloppe de renforcement mécanique dans ladite partie centrale cylindrique,
- préalablement à la dépose du premier enroulement filamentaire, on traite la surface externe d'au moins une partie de l'enveloppe intérieure pour augmenter les propriétés adhésives et de mouillage du matériau constitutif de ladite enveloppe intérieure,
- l'enveloppe de renforcement mécanique présente une fraction massique de fibres comprise entre 65% et 85%, et encore mieux entre 75% et 81%.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement un réservoir destiné au stockage de gaz sous pression selon un premier mode de réalisation de la présente invention, ce réservoir comportant deux embases identiques ;
- la figure 2 montre l'enveloppe intérieure de stockage du réservoir de la Fig. 1 sur laquelle est placée une nappe de fibres de renforcement d'une couche de type hélicoidale ;
- la figure 3 montre l'enveloppe intérieure de stockage du réservoir de la Fig. 1 sur laquelle est placée une nappe de fibres de renforcement d'une couche de type hélicoidale fermante ;
- la figure 4 montre l'enveloppe intérieure de stockage du réservoir de la Fig. 1 sur laquelle est placée une nappe de fibres de renforcement d'une couche de type circonférentielle ;
- la figure 5 montre l'enveloppe intérieure de stockage d'un réservoir de stockage selon un deuxième mode de réalisation de l'invention sur laquelle est placée une nappe de fibres de renforcement d'une couche de type hélicoidale fermante, l'enveloppe interne ne comportant qu'une seule ouverture recevant une embase ;
- la figure 6 montre l'enveloppe intérieure de stockage d'un réservoir de stockage selon un troisième mode de réalisation de l'invention sur laquelle est placée une nappe de fibres de renforcement d'une couche de type hélicoidale fermante, l'enveloppe interne comportant une ouverture à chacune de ses extrémités, chaque ouverture ayant un diamètre différent ;
- la figure 7 est une vue partielle en coupe et éclatée de l'enveloppe de renfort du réservoir de la Fig. 1 montrant les différentes couches de cette enveloppe ;

### DESCRIPTION DETAILLEE DE MODES DE REALISATION DE L'INVENTION

Tout d'abord, on note que les figures ne sont pas à l'échelle.

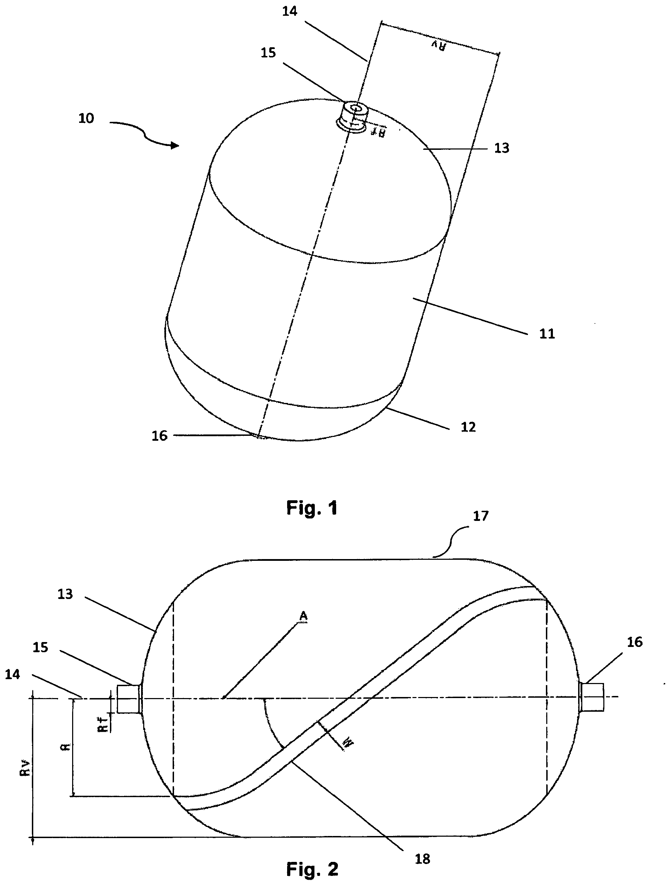

Les Figures 1 à 4 décrivent un réservoir destiné au stockage de gaz sous pression selon un premier mode de réalisation de la présente invention.

Ce réservoir 10 comporte une partie centrale 11 cylindrique de rayon Rv, laquelle est fermée à ses deux extrémités par des dômes 12, 13.

Le réservoir 10 définit un axe principal 14, ou axe de révolution du réservoir, s'étendant dans la direction longitudinale de ce réservoir 10.

Chaque dôme 12, 13 de forme bombée, est pourvu d'une embase 15, 16, une de ces embases 15 étant utilisée pour assurer la connexion intérieur/extérieur du réservoir, et par conséquent, le remplissage en gaz et le vidage. A cet effet, cette embase 15 est notamment destiné à recevoir un raccord tel qu'un robinet, une vanne ou encore un tuyau. L'autre embase 16 placée à l'extrémité opposée du réservoir 10 reçoit un robinet, un capteur de pression et/ou de température et/ou d'humidité.

Le réservoir 10 comporte une enveloppe interne 17 étanche, encore appelée liner, définissant une chambre de stockage dans laquelle un gaz sous pression est destiné à être stocké. Ce liner 17 comporte à chacune de ses extrémités une ouverture polaire centrée sur l'axe principal 14 du réservoir 10. Chaque ouverture polaire qui est circulaire de rayon Rf, reçoit une embase 15, 16 correspondante. Ces ouvertures polaires sont de diamètre identique.

Le liner 17 est ici constitué d'un polymère tel que du polyamide, du polyéthylène de haute densité (HDPE), du polyuréthane (PU), ...

Le liner 17 est également entouré d'une enveloppe de renforcement mécanique destinée à renforcer mécaniquement le réservoir pour supporter la pression du gaz stocké dans la chambre de stockage.

Cette enveloppe de renforcement est ici réalisée dans un matériau composite obtenu par enroulement filamentaire de fibres unidirectionnelles imprégnées de résine.

On utilise de préférence des fibres longues qui assurent une meilleure résistance face aux déformations successives et répétitives, par exemple des fibres de verre ou de carbone liées entre elles par une résine telle qu'une résine époxy.

Chaque couche est orientée par rapport à l'axe principal 14 du réservoir d'un angle de bobinage.

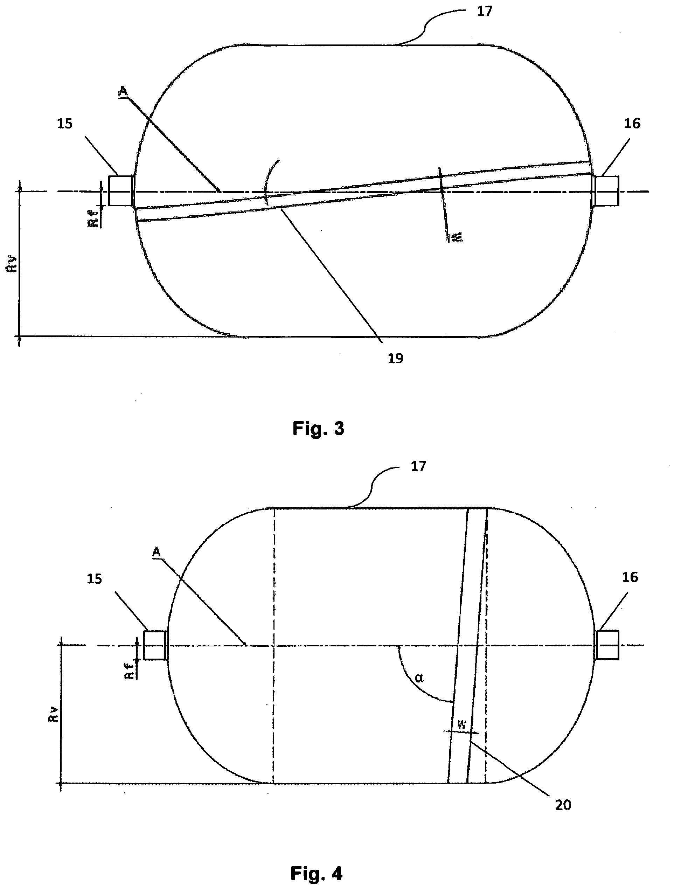

Les fibres de renforcement déposées sur le liner 17 pour former l'enveloppe de renforcement mécanique formant une nappe définie par une largeur W, on distinguera trois types de couches :
- couche de type hélicoidale : les fibres 18 suivent une trajectoire en hélice par rapport à l'axe de rotation du mandrin et l'angle α moyen de la couche est déterminé de manière à ce que le rayon R de l'ouverture polaire circulaire de la couche soit supérieur à l'ouverture polaire Rf + 1/2 x W du liner (Fig. 2),
- couche de type hélicoidale fermante : il s'agit d'une couche de type hélicoidale présentant des fibres 19 agencées par rapport à l'axe principal 14 du réservoir selon un angle α moyen déterminé de manière à ce que le rayon R de l'ouverture polaire circulaire de la couche soit compris entre le rayon d'ouverture polaire circulaire Rf du liner et un rayon d'ouverture polaire circulaire égal à Rf + 1/2 x W (Fig. 3),
- couche de type circonférentielle : les fibres 20 de cette couche suivent une trajectoire en spirale par rapport à l'axe de rotation du mandrin et cette couche présente des fibres 20 agencées par rapport à l'axe principal 14 du réservoir selon un angle α moyen compris entre 80° et 90° (Fig. 4).

Le réservoir est réalisé en utilisant préférentiellement le procédé d'enroulement filamentaire avec imprégnation directe par voie humide.

De préférence, le réservoir comporte également une couche hélicoidale fermante 21 et une couche circonférentielle de protection réalisées préférentiellement en fibres de verre et résine époxy.

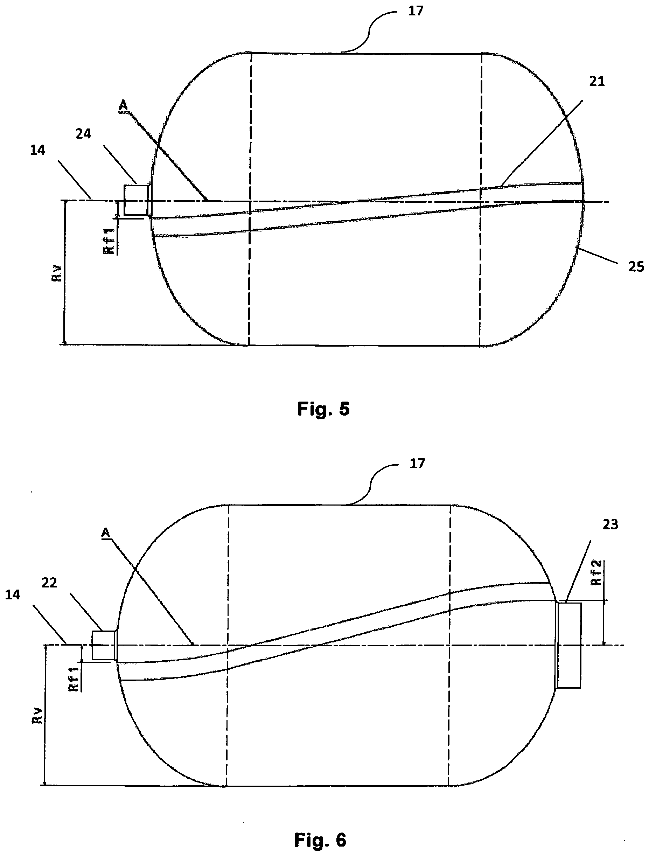

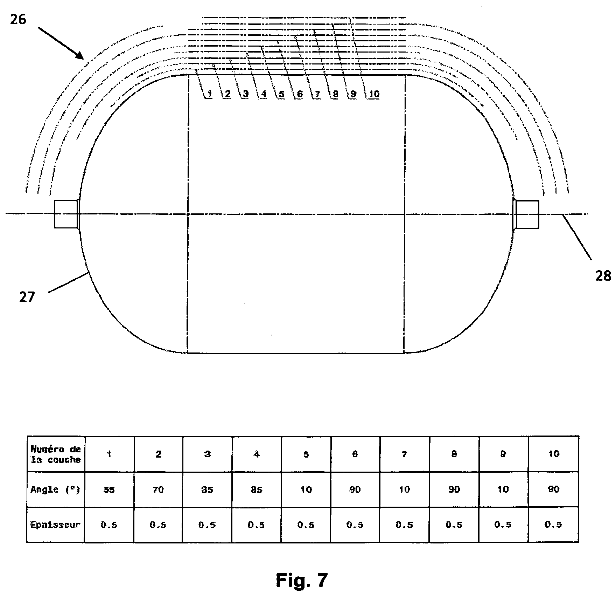

Comme le montre les Figures 5 et 6, le liner 17 peut encore comporter deux ouvertures 22, 23 pour le passage du gaz présentant des rayons d'ouvertures polaires différents (Fig. 6), ou une seule ouverture 24 pour le passage du gaz, le fond 25 opposé étant un fond fermé (Fig. 7). Dans ces deux cas, le liner est défini par deux rayons d'ouvertures polaires différents Rf1 et Rf2. La couche de type hélicoidale fermante 21 est alors définie par deux rayons d'ouvertures polaires différents compris entre Rf1 et Rf1+W, et entre Rf2 et Rf2+W. L'angle d'enroulement considéré est l'angle moyen entre l'angle de la nappe en début de partie cylindrique et l'angle de la nappe en fin de partie cylindrique.

La Figure 7 représente un réservoir selon un mode de réalisation particulier de la présente invention. Seule la structure de l'enveloppe 26 de renforcement mécanique protégeant le liner 27 sera décrite ci-après.

En partant du liner 27 vers l'extérieur du réservoir, cette enveloppe 26 de renforcement mécanique comprend un premier enroulement filamentaire comportant deux couches superposées de nappes de fibres dont la valeur de l'angle αi formé entre la direction longitudinale de chaque fibre d'une couche donnée et l'axe longitudinal 28 défini par le liner 26 est compris entre +/- 55° et +/- 85°. Ce premier enroulement représente vingt pourcent (20%) de l'épaisseur totale de l'enveloppe de renforcement mécanique dans sa partie centrale cylindrique.

On note que la valeur absolue de l'angle αi formé par les fibres de la seconde couche de ce premier enroulement filamentaire, c'est-à-dire soixante-dix (70), est supérieure à celle, cinquante-cinq (55), de la première couche.

Sur ce premier enroulement filamentaire a été formé un deuxième enroulement filamentaire comprenant un empilement de trois couches. La couche la plus externe, couche numérotée cinq (5), de ce deuxième enroulement filamentaire est une couche hélicoidale fermante dont l'angle αj formé entre la direction longitudinale de chacune de ses fibres et l'axe longitudinal 28 est de dix degrés (10°). Les deux couches, numérotées trois (3) et quatre (4), placées sous cette dernière couche sont telles que :
- la couche de base de cet enroulement, la couche numérotée 3, qui est placée directement sur la couche la plus externe du premier enroulement filamentaire, présente un angle dont la valeur absolue (35) est inférieure à la valeur absolue la plus petite de l'angle αi pour le premier enroulement, et
- la couche placée au-dessus de cette couche de base, i.e. la couche numérotée 4, présente pour sa part un angle d'inclinaison des fibres par rapport à l'axe longitudinal 28 dont la valeur absolue (85) est supérieure à la valeur absolue maximale de l'angle αi pour le premier enroulement.

L'ensemble formé par ces deux enroulements filamentaires à l'exception de la couche hélicoidale fermante, représente quarante pourcent (40%) de l'épaisseur totale de l'enveloppe de renforcement mécanique dans sa partie centrale cylindrique.

Sur ces deux premiers enroulements filamentaires est placé une alternance de couches circonférentielles ayant des fibres agencées par rapport audit axe longitudinal 28 selon un angle αk=90° et de couches hélicoidales fermantes dont l'angle αk formé entre la direction longitudinale de chaque fibre et l'axe longitudinal 28 est de dix degrés (10°).

Le nombre total de couches constituant cette enveloppe de renforcement mécanique est seulement de dix (10) couches.

Afin de démontrer les avantages techniques apportés par la présente invention, des essais comparatifs ont été conduits entre un réservoir selon un mode de mise en oeuvre de la présente invention avec des réservoirs commerciaux. Le tableau montre les résultats obtenus lors de ces tests dans lequel le réservoir selon un mode de mise en oeuvre de la présente invention est dénommé réservoir 1 tandis que les deux réservoirs commerciaux distincts sont respectivement dénommés réservoir 2 et réservoir 3.

Les volumes en eau et les masses de ces réservoirs sont comparables. En revanche, la masse de gaz stocké est différente car la pression de service est différente.

**Tableau 1 : Comparatif des performances du réservoir selon un mode de mise en oeuvre avec des réservoirs tests**

| **Réservoir** | **Type** | Diamètre mm | Longueur mm | Capacité en Eau Litres | Poids à Vide Kg | Pression de Service bars | Coef. de Sécurité | Type de gaz | Masse de gaz | Masse de gaz/Masse de réservoir |
|---|---|---|---|---|---|---|---|---|---|---|
| Réservoir 1 | **4** | 545 | 1030 | **143** | 77 | 525 | 3 | **H2** | 4,696 | 6,1% |
| Réservoir 2 | 3 | 551 | 972 | **154** | 82 | 350 | 2,35 | **H2** | 3,73 | 4,5% |
| Réservoir 3 | **4** | 403 | 1820 | **156** | 79 | 350 | 2,35 | **H2** | 3,81 | 4,8% |

On constate que, bien qu'ayant à la fois une pression de service et un coefficient de sécurité plus élevés (de l'ordre de trente pourcent (30%) supérieur) que ceux des réservoirs commerciaux 2 et 3, ce qui nécessite un renforcement de l'enveloppe de renfort mécanique par rapport à des réservoirs travaillant à de plus faibles pressions, le réservoir 1 selon un mode de mise en oeuvre de la présente invention assure avantageusement une capacité de stockage plus élevée à masse de réservoir comparable.

Par ailleurs, le coefficient de sécurité appliqué sur les réservoirs commerciaux 2 et 3 étant plus faible, on pourrait théoriquement :
- soit augmenter davantage la pression de service du réservoir 1 obtenu selon un mode de mise en oeuvre de l'invention, ce qui induit une augmentation de la masse de gaz stocké,
- soit diminuer encore la quantité de fibre utilisée, c'est-à-dire diminuer la masse du réservoir 1.

Dans les deux cas, on aboutirait à une augmentation du ratio masse de gaz stocké/masse de réservoir.

## Revendications

1. Réservoir destiné au stockage de milieux liquides ou gazeux sous pression, comprenant une enveloppe (17) intérieure définissant une chambre de stockage et une enveloppe de renforcement mécanique entourant au moins ladite enveloppe (17) intérieure, ladite enveloppe (17) intérieure comprenant une ouverture à au moins une de ses extrémités, une partie centrale (11) cylindrique et deux parties (12, 13) d'extrémité dont au moins une est bombée vers l'extérieur, ladite enveloppe (17) intérieure définissant un axe (14) longitudinal, **caractérisé en ce que** ladite enveloppe de renforcement mécanique comprend successivement en partant de l'enveloppe (17) intérieure vers l'extérieur :
- un premier enroulement filamentaire comprenant une couche ou un empilement de couches ayant chacune des fibres agencées de sorte que l'angle αi formé entre la direction longitudinale de chaque fibre et ledit axe (14) longitudinal est compris entre +/- 45° et +/- 85°, la valeur absolue de l'angle αi formé par les fibres de chaque couche superposée sur une autre couche de cet empilement étant supérieure à la valeur absolue de l'angle αi formé par les fibres de la couche immédiatement inférieure dans cet empilement,
- un deuxième enroulement filamentaire comprenant une ou plusieurs couches dites intermédiaires placées sous une couche unique dite couche la plus externe dudit deuxième enroulement, lesdites couches intermédiaires étant superposées en définissant un empilement, ladite couche ou chaque couche intermédiaire de cet empilement ayant des fibres agencées de sorte que la valeur absolue de l'angle αj formé entre la direction longitudinale de chaque fibre de la couche intermédiaire correspondante et ledit axe (14) longitudinal est :
* soit égale ou supérieure à la valeur absolue maximale de l'angle αi pour le premier enroulement, et égale ou supérieure à la valeur absolue de l'angle αj formé par les fibres de la couche intermédiaire immédiatement inférieure lorsque ladite couche intermédiaire correspondante est superposée sur une autre couche intermédiaire,
* soit égale ou inférieure à la valeur absolue la plus petite de l'angle αi pour ledit premier enroulement, et égale ou inférieure à la valeur absolue de l'angle αj formé par les fibres de la couche intermédiaire immédiatement inférieure lorsque ladite couche intermédiaire correspondante est superposée sur une autre couche intermédiaire,
ladite couche la plus externe dudit deuxième enroulement étant une couche hélicoidale fermante ayant des fibres agencées de sorte que pour ladite ou chaque ouverture de ladite enveloppe (17) intérieure, le diamètre d'ouverture polaire de ladite couche hélicoidale fermante (21) est égal ou sensiblement égal au diamètre de l'ouverture de l'enveloppe (17) intérieure considérée,
- au moins une couche circonférentielle ayant des fibres agencées par rapport audit axe (14) longitudinal selon un angle αk compris entre +/- 80° et +/- 90°, et/ou au moins une couche hélicoidale ayant des fibres agencées par rapport audit axe (14) longitudinal selon un angle αk compris entre +/- 5° et +/-45°, et/ou au moins une couche hélicoidale fermante pour compléter le nombre de couches de l'ensemble formé par les premier et deuxième enroulements filamentaires de manière à obtenir l'épaisseur totale de l'enveloppe de renforcement mécanique dans ladite partie centrale (11) cylindrique.

2. Réservoir selon la revendication 1, **caractérisé en ce que** l'épaisseur dudit premier enroulement filamentaire représente entre 15 et 35% de l'épaisseur de l'enveloppe de renforcement mécanique dans ladite partie centrale (11) cylindrique.

3. Réservoir selon la revendication 1 ou 2, **caractérisé en ce que** l'épaisseur de l'ensemble formé par les premier et deuxième enroulements filamentaires à l'exception de ladite couche hélicoidale fermante (21), représente au plus 45% de l'épaisseur de l'enveloppe de renforcement mécanique dans ladite partie centrale (11) cylindrique.

4. Réservoir selon la revendication 3, **caractérisé en ce que** l'épaisseur de l'ensemble formé par les premier et deuxième enroulements filamentaires à l'exception de ladite couche hélicoidale fermante (21), représente entre 23 et 45% de l'épaisseur de l'enveloppe de renforcement mécanique dans ladite partie centrale (11) cylindrique.

5. Réservoir selon l'une quelconque des revendications 1 à 4, **caractérisé en ce que** la couche la plus externe de l'enveloppe de renforcement mécanique est une couche de type circonférentielle ayant des fibres agencées par rapport audit axe (14) longitudinal selon un angle αl compris entre +/- 80° et +/- 90°.

6. Réservoir selon l'une quelconque des revendications 1 à 5, **caractérisé en ce que** l'enveloppe de renforcement mécanique présente une fraction massique de fibres comprise entre 65% et 85%.

7. Réservoir selon la revendication 6, **caractérisé en ce que** l'enveloppe de renforcement mécanique présente une fraction massique de fibres comprise entre 75% et 81%.

8. Réservoir selon l'une quelconque des revendications 1 à 7, **caractérisé en ce que** les fibres sont choisies dans le groupe comprenant les fibres de carbone, de verre, d'aramide, les fibres organiques végétales, les fibres organiques animales, les fibres minérales et des combinaisons de ces éléments.

9. Procédé de fabrication d'un réservoir destiné au stockage de milieux liquides ou gazeux sous pression, ledit réservoir comprenant une enveloppe (17) intérieure définissant une chambre de stockage et une enveloppe de renforcement mécanique entourant au moins ladite enveloppe (17) intérieure, ladite enveloppe (17) intérieure comprenant une ouverture à au moins une de ses extrémités, une partie centrale (11) cylindrique et deux parties (12, 13) d'extrémité dont au moins une est bombée vers l'extérieur, ladite enveloppe (17) intérieure définissant un axe (14) longitudinal, **caractérisé en ce qu'**on réalise les étapes suivantes pour réaliser ladite enveloppe de renforcement mécanique :
- former d'abord un premier enroulement filamentaire comprenant une couche ou un empilement de couches ayant des fibres agencées de sorte que l'angle αi formé entre la direction longitudinale de chaque fibre et ledit axe (14) longitudinal est compris entre +/- 45° et +/- 85°, la valeur absolue de l'angle αi formé par les fibres de chaque couche superposée sur une autre couche de cet empilement étant supérieure à la valeur absolue de l'angle αi formé par les fibres de la couche immédiatement inférieure dans cet empilement,
- former un deuxième enroulement filamentaire comprenant une ou plusieurs couches dites intermédiaires placées sous une couche unique dite couche la plus externe dudit deuxième enroulement, lesdites couches intermédiaires étant superposées en définissant un empilement, ladite couche ou chaque couche intermédiaire de cet empilement ayant des fibres agencées de sorte que la valeur absolue de l'angle αj formé entre la direction longitudinale de chaque fibre de la couche intermédiaire correspondante et ledit axe (14) longitudinal est :
* soit égale ou supérieure à la valeur absolue maximale de l'angle αi pour le premier enroulement, et égale ou supérieure à la valeur absolue de l'angle αj formé par les fibres de la couche intermédiaire immédiatement inférieure lorsque ladite couche intermédiaire correspondante est superposée sur une autre couche intermédiaire,
* soit égale ou inférieure à la valeur absolue la plus petite de l'angle αi pour ledit premier enroulement, et égale ou inférieure à la valeur absolue de l'angle αj formé par les fibres de la couche intermédiaire immédiatement inférieure lorsque ladite couche intermédiaire correspondante est superposée sur une autre couche intermédiaire,
ladite couche la plus externe dudit deuxième enroulement étant une couche hélicoidale fermante ayant des fibres agencées de sorte que, pour ladite ou chaque ouverture de ladite enveloppe (17) intérieure, le diamètre d'ouverture polaire de ladite couche hélicoidale fermante (21) est égal ou sensiblement égal au diamètre de l'ouverture de l'enveloppe (17) intérieure considérée,
- compléter ensuite ces premier et deuxième enroulements filamentaires avec la dépose d'au moins au moins une couche circonférentielle ayant des fibres agencées par rapport audit axe (14) longitudinal selon un angle αk compris entre +/- 80° et +/- 90°, et/ou d'au moins une couche hélicoidale ayant des fibres agencées par rapport audit axe (14) longitudinal selon un angle αk compris entre +/- 5° et +/- 45° et/ou d'au moins une couche hélicoidale fermante, pour obtenir l'épaisseur totale de l'enveloppe de renforcement mécanique dans ladite partie centrale (11) cylindrique.

10. Procédé selon la revendication 9, **caractérisé en ce que** la dernière couche déposée et formant ainsi la couche la plus externe de l'enveloppe de renforcement mécanique est une couche de type circonférentielle ayant des fibres agencées par rapport audit axe (14) longitudinal selon un angle αl compris entre +/- 80° et +/- 90°.

11. Procédé selon la revendication 9 ou 10, **caractérisé en ce que** les fibres sont imprégnées dans une résine thermodurcissable ou thermoplastique avant d'être enroulées sur ladite enveloppe.

12. Procédé selon l'une quelconque des revendications 9 à 11, **caractérisé en ce que** l'épaisseur dudit premier enroulement filamentaire représente entre 15 et 35% de l'épaisseur de l'enveloppe de renforcement mécanique dans ladite partie centrale (11) cylindrique.

13. Procédé selon l'une quelconque des revendications 9 à 12, **caractérisé en ce que** l'épaisseur de l'ensemble formé par les premier et deuxième enroulements filamentaires à l'exception de ladite couche hélicoidale fermante (21), représente entre 23 et 45% de l'épaisseur de l'enveloppe de renforcement mécanique dans ladite partie centrale (11) cylindrique.

14. Procédé selon l'une quelconque des revendications 9 à 13, **caractérisé en ce que** préalablement à la dépose du premier enroulement filamentaire, on traite la surface externe d'au moins une partie de l'enveloppe (17) intérieure pour augmenter les propriétés adhésives et de mouillage du matériau constitutif de ladite enveloppe (17) intérieure.

15. Procédé selon l'une quelconque des revendications 9 à 14, **caractérisé en ce que** l'enveloppe de renforcement mécanique présente une fraction massique de fibres comprise entre 65% et 85%.

16. Moyen de transport équipé d'au moins un réservoir selon l'une quelconque des revendications 1 à 8.

17. Utilisation du réservoir selon l'une quelconque des revendications 1 à 8 comme source d'alimentation en gaz ou en combustible.

18. Utilisation du réservoir selon l'une quelconque des revendications 1 à 8 comme accumulateur d'énergie.

## Patentansprüche

1. Tank, welcher zur Lagerung unter Druck stehender flüssiger oder gasförmiger Medien bestimmt ist und eine innere Hülle (17), die eine Lagerkammer definiert, und eine Hülle zur mechanischen Verstärkung, die wenigstens die innere Hülle (17) umgibt, umfasst, wobei die innere Hülle (17) eine Öffnung an wenigstens einem ihrer Enden, einen zylindrischen mittleren Teil (11) und zwei Endteile (12, 13), von denen wenigstens einer nach außen gewölbt ist, umfasst, wobei die innere Hülle (17) eine Längsachse (14) definiert, **dadurch gekennzeichnet, dass** die Hülle zur mechanischen Verstärkung nacheinander, von der inneren Hülle (17) aus nach außen, umfasst:
- eine erste Fadenwicklung, die eine Schicht oder einen Stapel von Schichten umfasst, die jeweils Fasern aufweisen, die derart angeordnet sind, dass der Winkel αi, der zwischen der Längsrichtung jeder Faser und der Längsachse (14) gebildet wird, zwischen +/- 45° und +/- 85° liegt, wobei der absolute Betrag des Winkels αi, der von den Fasern jeder Schicht, die eine andere Schicht dieses Stapels überlagert, gebildet wird, größer als der absolute Betrag des Winkels αi ist, der von den Fasern der unmittelbar darunterliegenden Schicht in diesem Stapel gebildet wird,
- eine zweite Fadenwicklung, die eine oder mehrere Schichten, Zwischenschichten genannt, umfasst, die unter einer einzelnen Schicht, äußerste Schicht der zweiten Wicklung genannt, angeordnet sind, wobei die Zwischenschichten übereinanderliegen und dabei einen Stapel definieren, wobei die oder jede Zwischenschicht dieses Stapels Fasern aufweist, die derart angeordnet sind, dass der absolute Betrag des Winkels αj, der zwischen der Längsrichtung jeder Faser der betreffenden Zwischenschicht und der Längsachse (14) gebildet wird,
* entweder gleich dem oder größer als der maximale absolute Betrag des Winkels αi für die erste Wicklung ist und gleich dem oder größer als der absolute Betrag des Winkels αj ist, der von den Fasern der unmittelbar darunterliegenden Zwischenschicht gebildet wird, wenn die betreffende Zwischenschicht eine andere Zwischenschicht überlagert,
* oder gleich dem oder kleiner als der kleinste absolute Betrag des Winkels αi für die erste Wicklung ist und gleich dem oder kleiner als der absolute Betrag des Winkels αj ist, der von den Fasern der unmittelbar darunterliegenden Zwischenschicht gebildet wird, wenn die betreffende Zwischenschicht eine andere Zwischenschicht überlagert,
wobei die äußerste Schicht der zweiten Wicklung eine abschließende spiralförmige Schicht ist, welche Fasern aufweist, die derart angeordnet sind, dass für die oder jede Öffnung der inneren Hülle (17) der Durchmesser der Polaröffnung der abschließenden spiralförmigen Schicht (21) gleich oder im Wesentlichen gleich dem Durchmesser der Öffnung der betrachteten inneren Hülle (17) ist,
- wenigstens eine Umfangsschicht, die Fasern aufweist, welche bezüglich der Längsachse (14) unter einem Winkel αk angeordnet sind, der zwischen +/- 80° und +/- 90° liegt, und/oder wenigstens eine spiralförmige Schicht, die Fasern aufweist, welche bezüglich der Längsachse (14) unter einem Winkel αk angeordnet sind, der zwischen +/- 5° und +/- 45° liegt, und/oder wenigstens eine abschließende spiralförmige Schicht, um die Anzahl von Schichten der von der ersten und der zweiten Fadenwicklung gebildeten Anordnung zu vervollständigen, so dass die Gesamtdicke der Hülle zur mechanischen Verstärkung in dem zylindrischen mittleren Teil (11) erhalten wird.

2. Tank nach Anspruch 1, **dadurch gekennzeichnet, dass** auf die Dicke der ersten Fadenwicklung zwischen 15 und 35 % der Dicke der Hülle zur mechanischen Verstärkung in dem zylindrischen mittleren Teil (11) entfallen.

3. Tank nach Anspruch 1 oder 2, **dadurch gekennzeichnet, dass** auf die Dicke der Anordnung, die von der ersten und der zweiten Fadenwicklung ohne die abschließende spiralförmige Schicht (21) gebildet wird, höchstens 45 % der Dicke der Hülle zur mechanischen Verstärkung in dem zylindrischen mittleren Teil (11) entfallen.

4. Tank nach Anspruch 3, **dadurch gekennzeichnet, dass** auf die Dicke der Anordnung, die von der ersten und der zweiten Fadenwicklung ohne die abschließende spiralförmige Schicht (21) gebildet wird, zwischen 23 und 45 % der Dicke der Hülle zur mechanischen Verstärkung in dem zylindrischen mittleren Teil (11) entfallen.

5. Tank nach einem der Ansprüche 1 bis 4, **dadurch gekennzeichnet, dass** die äußerste Schicht der Hülle zur mechanischen Verstärkung eine Schicht vom Typ einer Umfangsschicht ist, die Fasern aufweist, welche bezüglich der Längsachse (14) unter einem Winkel αl angeordnet sind, der zwischen +/- 80° und +/- 90° liegt.

6. Tank nach einem der Ansprüche 1 bis 5, **dadurch gekennzeichnet, dass** die Hülle zur mechanischen Verstärkung einen Massenanteil von Fasern aufweist, der zwischen 65 % und 85 % liegt.

7. Tank nach Anspruch 6, **dadurch gekennzeichnet, dass** die Hülle zur mechanischen Verstärkung einen Massenanteil von Fasern aufweist, der zwischen 75 % und 81 % liegt.

8. Tank nach einem der Ansprüche 1 bis 7, **dadurch gekennzeichnet, dass** die Fasern aus der Gruppe ausgewählt sind, welche Kohlenstofffasern, Glasfasern, Aramidfasern, pflanzliche organische Fasern, tierische organische Fasern, mineralische Fasern und Kombinationen dieser Elemente umfasst.

9. Verfahren zur Herstellung eines Tanks, welcher zur Lagerung unter Druck stehender flüssiger oder gasförmiger Medien bestimmt ist, wobei der Tank eine innere Hülle (17), die eine Lagerkammer definiert, und eine Hülle zur mechanischen Verstärkung, die wenigstens die innere Hülle (17) umgibt, umfasst, wobei die innere Hülle (17) eine Öffnung an wenigstens einem ihrer Enden, einen zylindrischen mittleren Teil (11) und zwei Endteile (12, 13), von denen wenigstens einer nach außen gewölbt ist, umfasst, wobei die innere Hülle (17) eine Längsachse (14) definiert, **dadurch gekennzeichnet, dass** die folgenden Schritte ausgeführt werden, um die Hülle zur mechanischen Verstärkung herzustellen:
- zuerst Ausbilden einer ersten Fadenwicklung, die eine Schicht oder einen Stapel von Schichten umfasst, die Fasern aufweisen, die derart angeordnet sind, dass der Winkel αi, der zwischen der Längsrichtung jeder Faser und der Längsachse (14) gebildet wird, zwischen +/- 45° und +/- 85° liegt, wobei der absolute Betrag des Winkels αi, der von den Fasern jeder Schicht, die eine andere Schicht dieses Stapels überlagert, gebildet wird, größer als der absolute Betrag des Winkels αi ist, der von den Fasern der unmittelbar darunterliegenden Schicht in diesem Stapel gebildet wird,
- Ausbilden einer zweiten Fadenwicklung, die eine oder mehrere Schichten, Zwischenschichten genannt, umfasst, die unter einer einzelnen Schicht, äußerste Schicht der zweiten Wicklung genannt, angeordnet sind, wobei die Zwischenschichten übereinanderliegen und dabei einen Stapel definieren, wobei die oder jede Zwischenschicht dieses Stapels Fasern aufweist, die derart angeordnet sind, dass der absolute Betrag des Winkels αj, der zwischen der Längsrichtung jeder Faser der betreffenden Zwischenschicht und der Längsachse (14) gebildet wird,
* entweder gleich dem oder größer als der maximale absolute Betrag des Winkels αi für die erste Wicklung ist und gleich dem oder größer als der absolute Betrag des Winkels αj ist, der von den Fasern der unmittelbar darunterliegenden Zwischenschicht gebildet wird, wenn die betreffende Zwischenschicht eine andere Zwischenschicht überlagert,
* oder gleich dem oder kleiner als der kleinste absolute Betrag des Winkels αi für die erste Wicklung ist und gleich dem oder kleiner als der absolute Betrag des Winkels αj ist, der von den Fasern der unmittelbar darunterliegenden Zwischenschicht gebildet wird, wenn die betreffende Zwischenschicht eine andere Zwischenschicht überlagert,
wobei die äußerste Schicht der zweiten Wicklung eine abschließende spiralförmige Schicht ist, welche Fasern aufweist, die derart angeordnet sind, dass für die oder jede Öffnung der inneren Hülle (17) der Durchmesser der Polaröffnung der abschließenden spiralförmigen Schicht (21) gleich oder im Wesentlichen gleich dem Durchmesser der Öffnung der betrachteten inneren Hülle (17) ist,
- anschließend Vervollständigen dieser ersten und dieser zweiten Fadenwicklung durch die Aufbringung wenigstens wenigstens einer Umfangsschicht, die Fasern aufweist, welche bezüglich der Längsachse (14) unter einem Winkel αk angeordnet sind, der zwischen +/- 80° und +/- 90° liegt, und/oder wenigstens einer spiralförmigen Schicht, die Fasern aufweist, welche bezüglich der Längsachse (14) unter einem Winkel αk angeordnet sind, der zwischen +/- 5° und +/- 45° liegt, und/oder wenigstens einer abschließenden spiralförmigen Schicht, um die Gesamtdicke der Hülle zur mechanischen Verstärkung in dem zylindrischen mittleren Teil (11) zu erhalten.

10. Verfahren nach Anspruch 9, **dadurch gekennzeichnet, dass** die letzte und somit die äußerste Schicht der Hülle zur mechanischen Verstärkung bildende Schicht eine Schicht vom Typ einer Umfangsschicht ist, die Fasern aufweist, welche bezüglich der Längsachse (14) unter einem Winkel αl angeordnet sind, der zwischen +/- 80° und +/- 90° liegt.

11. Verfahren nach Anspruch 9 oder 10, **dadurch gekennzeichnet, dass** die Fasern mit einem wärmeaushärtenden oder thermoplastischen Harz getränkt werden, bevor sie auf die Hülle gewickelt werden.

12. Verfahren nach einem der Ansprüche 9 bis 11, **dadurch gekennzeichnet, dass** auf die Dicke der ersten Fadenwicklung zwischen 15 und 35 % der Dicke der Hülle zur mechanischen Verstärkung in dem zylindrischen mittleren Teil (11) entfallen.

13. Verfahren nach einem der Ansprüche 9 bis 12, **dadurch gekennzeichnet, dass** auf die Dicke der Anordnung, die von der ersten und der zweiten Fadenwicklung ohne die abschließende spiralförmige Schicht (21) gebildet wird, zwischen 23 und 45 % der Dicke der Hülle zur mechanischen Verstärkung in dem zylindrischen mittleren Teil (11) entfallen.

14. Verfahren nach einem der Ansprüche 9 bis 13, **dadurch gekennzeichnet, dass** vor der Aufbringung der ersten Fadenwicklung die Außenfläche wenigstens eines Teils der inneren Hülle (17) behandelt wird, um die Klebe- und Benetzungseigenschaften des Materials, aus dem die innere Hülle (17) besteht, zu verbessern.

15. Verfahren nach einem der Ansprüche 9 bis 14, **dadurch gekennzeichnet, dass** die Hülle zur mechanischen Verstärkung einen Massenanteil von Fasern aufweist, der zwischen 65 % und 85 % liegt.

16. Transportmittel, das mit wenigstens einem Tank nach einem der Ansprüche 1 bis 8 ausgestattet ist.

17. Verwendung des Tanks nach einem der Ansprüche 1 bis 8 als Quelle zur Versorgung mit Gas oder mit Brennstoff.

18. Verwendung des Tanks nach einem der Ansprüche 1 bis 8 als Energiespeicher.

## Claims

1. Tank intended for the storage of liquid or gaseous media under pressure, comprising an interior envelope (17) defining a storage chamber and a mechanical reinforcing envelope surrounding at least the said interior envelope (17), the said interior envelope (17) comprising an opening at least at one of its ends, a cylindrical central part (11) and two end parts (12, 13) at least one of which is domed outwards, the said interior envelope (17) defining a longitudinal axis (14), **characterized in that** the said mechanical reinforcing envelope comprises, in succession, from the interior envelope (17) outwards:
- a first filament winding comprising a layer or stack of layers each having fibres arranged in such a way that the angle αi formed between the longitudinal direction of each fibre and the said longitudinal axis (14) is comprised between +/-45° and +/- 85°, the absolute value of the angle αi formed by the fibres of each layer superimposed on another layer of this stack being greater than the absolute value of the angle αi formed by the fibres of the layer immediately below in this stack,
- a second filament winding comprising one or more layers referred to as intermediate layers positioned under a single layer referred to as the outermost layer of the said second winding, the said intermediate layers being superimposed to define a stack, the said or each intermediate layer of this stack having fibres arranged in such a way that the absolute value of the angle αj formed between the longitudinal direction of each fibre of the corresponding intermediate layer and the said longitudinal axis (14) is:
* either equal to or greater than the maximum absolute value of the angle αi for the first winding, and equal to or greater than the absolute value of the angle αj formed by the fibres of the intermediate layer immediately below when the said corresponding intermediate layer is superimposed on another intermediate layer,
* or equal to or less than the smallest absolute value of the angle αi for the said first winding, and equal to or less than the absolute value of the angle αj formed by the fibres of the intermediate layer immediately below when the said corresponding intermediate layer is superimposed on another intermediate layer,
the said outermost layer of the said second winding being a closing helical layer having fibres arranged in such a way that, for the said or each opening of the said interior envelope (17), the polar opening diameter of the said closing helical layer (21) is equal or substantially equal to the diameter of the opening of the interior envelope (17) considered,
- at least one circumferential layer having fibres arranged with respect to the said longitudinal axis (14) at an angle αk comprised between +/- 80° and +/- 90°, and/or at least one helical layer having fibres arranged with respect to the said longitudinal axis (14) at an angle αk comprised between +/- 5° and +/- 45°, and/or at least a closing helical layer to complete the number of layers of the assembly formed by the first and second filament windings so as to obtain the total thickness of the mechanical reinforcing envelope in the said cylindrical central part (11).

2. Tank according to Claim 1, **characterized in that** the thickness of the said first filament winding represents between 15 and 35% of the thickness of the mechanical reinforcing envelope in the said cylindrical central part (11).

3. Tank according to Claim 1 or 2, **characterized in that** the thickness of the assembly formed by the first and second filament windings, with the exception of the said closing helical layer (21), represents at most 45% of the thickness of the mechanical reinforcing envelope in the said cylindrical central part (11).

4. Tank according to Claim 3, **characterized in that** the thickness of the assembly formed by the first and second filament windings with the exception of the said closing helical layer (21), represents between 23 and 45% of the thickness of the mechanical reinforcing envelope in the said cylindrical central part (11).

5. Tank according to any one of Claims 1 to 4, **characterized in that** the outermost layer of the mechanical reinforcing envelope is a layer of circumferential type having fibres arranged with respect to the said longitudinal axis (14) at an angle αl of between +/- 80° and +/- 90°.

6. Tank according to any one of Claims 1 to 5, **characterized in that** the mechanical reinforcing envelope has a mass fraction of fibres of between 65% and 85%.

7. Tank according to Claim 6, **characterized in that** the mechanical reinforcing envelope has a mass fraction of fibres of between 75% and 81%.

8. Tank according to any one of Claims 1 to 7, **characterized in that** the fibres are selected from the group comprising carbon, glass, aramid fibres, organic plant fibres, organic animal fibres, inorganic fibres and combinations of these elements.

9. Method of manufacturing a tank intended for the storage of liquid or gaseous media under pressure, the said tank comprising an interior envelope (17) defining a storage chamber and a mechanical reinforcing envelope surrounding at least the said interior envelope (17), the said interior envelope (17) comprising an opening at least at one of its ends, a cylindrical central part (11) and two end parts (12, 13) at least one of which is domed outwards, the said interior envelope (17) defining a longitudinal axis (14), **characterized in that** the following steps are performed in order to create the said mechanical reinforcing envelope:
- first of all a first filament winding is formed, comprising a layer or a stack of layers having fibres arranged in such a way that the angle αi formed between the longitudinal direction of each fibre and the said longitudinal axis (14) is comprised between +/- 45° and +/- 85°, the absolute value of the angle αi formed by the fibres of each layer superimposed on another layer of this stack being greater than the absolute value of the angle αi formed by the fibres of the layer immediately below in this stack,
- forming a second filament winding comprising one or more layers referred to as intermediate layers positioned under a single layer referred to as the outermost layer of the said second winding, the said intermediate layers being superimposed to define a stack, the said or each intermediate layer of this stack having fibres arranged in such a way that the absolute value of the angle αj formed between the longitudinal direction of each fibre of the corresponding intermediate layer and the said longitudinal axis (14) is:
* either equal to or greater than the maximum absolute value of the angle αi for the first winding, and equal to or greater than the absolute value of the angle αj formed by the fibres of the intermediate layer immediately below when the said corresponding intermediate layer is superimposed on another intermediate layer,
* or equal to or less than the smallest absolute value of the angle αi for the said first winding, and equal to or less than the absolute value of the angle αj formed by the fibres of the intermediate layer immediately below when the said corresponding intermediate layer is superimposed on another intermediate layer,
the said outermost layer of the said second winding being a closing helical layer having fibres arranged in such a way that, for the said or each opening of the said interior envelope (17), the polar opening diameter of the said closing helical layer (21) is equal or substantially equal to the diameter of the opening of the interior envelope (17) considered,
- then supplementing these first and second filament windings by the laying of at least at least one circumferential layer having fibres arranged with respect to the said longitudinal axis (14) at an angle αk comprised between +/- 80° and +/- 90°, and/or at least one helical layer having fibres arranged with respect to the said longitudinal axis (14) at an angle αk comprised between +/- 5° and +/- 45°, and/or at least a closing helical layer so as to obtain the total thickness of the mechanical reinforcing envelope in the said cylindrical central part (11).

10. Method according to Claim 9, **characterized in that** the last layer laid which thus forms the outermost layer of the mechanical reinforcing envelope, is a layer of circumferential type having fibres arranged with respect to the said longitudinal axis (14) at an angle αl of between +/- 80° and +/- 90°.

11. Method according to Claim 9 or 10, **characterized in that** the fibres are impregnated with a thermosetting or thermoplastic resin before being wound on to the said envelope.

12. Method according to any one of Claims 9 to 11, **characterized in that** the thickness of the said first filament winding represents between 15 and 35 % of the thickness of the mechanical reinforcing envelope in the said cylindrical central part (11).

13. Method according to any one of Claims 9 to 12, **characterized in that** the thickness of the assembly formed by the first and second filament windings, with the exception of the said closing helical layer (21), represents between 23 and 45 % of the thickness of the mechanical reinforcing envelope in the said cylindrical central part (11).

14. Method according to any one of Claims 9 to 13, **characterized in that** prior to laying the first filament winding, the external surface of at least part of the interior envelope (17) is treated in order to improve the adhesive and wetting properties of the material of which the said interior envelope (17) is made.

15. Method according to any one of Claims 9 to 14, **characterized in that** the mechanical reinforcing envelope has a mass fraction of fibres of between 65% and 85%.

16. Means of transport equipped with at least one tank according to any one of Claims 1 to 8.

17. Use of the tank according to any one of Claims 1 to 8 as a gas or fuel supply source.

18. Use of the tank according to any one of Claims 1 to 8 as an accumulator of energy.
